# FASCICULE DE BREVET EUROPEEN

(11) **EP 1 555 144 B1**
(45) Date de publication et mention de la délivrance du brevet: **23.06.2010**
(21) Numéro de dépôt: 04293016.4
(22) Date de dépôt: 17.12.2004
(51) Int. Cl.: B60G 15/06, F16C 33/76

(54) **Dispositif de roulement de butée de suspension**
Axialwälzlager für eine Aufhängung
Axial rolling bearing for a suspension

(30) Priorité: 13.01.2004 FR 0400272
(43) Date de publication de la demande: 20.07.2005
(73) Titulaire: Aktiebolaget SKF, 415 50 Göteborg (SE)
(72) Inventeur: Guegan, Jean-Marie, 37380 Monnaie (FR); Liverato, Yves-André, 37370 Saint-Paterne-Racan (FR); Montboeuf, Bruno, 37390 Cerelles (FR)
(74) Mandataire: Casalonga, Axel

(56) Documents cités:
- EP-A1- 0 561 704
- EP-A1- 1 060 868
- WO-A-89/05242
- FR-A- 2 697 472
- FR-A- 2 779 096

## Description

La présente invention concerne le domaine des butées de suspension utilisées en particulier sur les véhicules automobiles dans les jambes de suspension télescopiques des roues directrices.

Une butée de suspension comprend généralement une bague supérieure et une bague inférieure entre lesquelles sont disposés des éléments roulants, sous la forme de billes ou de rouleaux.

L'invention concerne plus particulièrement les butées de suspension disposées entre un élément d'appui lié à la caisse du véhicule et un élément d'appui lié à un ressort de suspension.

De façon connue en soi, la butée de suspension est disposée dans la partie supérieure de la jambe de suspension, entre une coupelle inférieure, servant également de siège d'appui pour un ressort de suspension, et un élément supérieur solidaire de la caisse du véhicule. Le ressort du dispositif de suspension est installé autour de la tige du piston d'amortisseur dont l'extrémité est solidaire d'un bloc-support élastique. Le roulement de butée de suspension permet un mouvement de rotation entre la coupelle d'appui du ressort, mobile en rotation, et le bloc-support élastique qui est fixé à la caisse du véhicule. La butée de suspension permet également de transmettre les efforts axiaux entre le ressort et la caisse du véhicule. Le mouvement angulaire relatif entre la coupelle d'appui du ressort et le bloc-support élastique découle d'un braquage de la roue directrice et/ou la compression du ressort de suspension. On peut se référer au document français n° 2 779 096.

Les roulements de butée de suspension sont situés sous la caisse du véhicule et à proximité immédiate des roues qui projettent, notamment par temps de pluie, des éléments polluants susceptibles de rentrer dans le roulement et d'en altérer à la longue le bon fonctionnement.

On peut utiliser de manière connue en soi, comme dans les documents US 4 995 737 ou EP-A-390 331, un dispositif utilisant un ou deux capots en matière plastique, chaque capot venant coiffer une bague et possédant des moyens de retenue axiale coopérant avec l'autre capot. L'étanchéité est alors assurée par des lèvres issues de l'un des capots et venant frotter sur l'autre capot. Les capots sont généralement réalisés en matière plastique chargée de fibres de verre pour leur conférer la résistance et la rigidité nécessaires. Ce matériau s'avère trop rigide pour constituer une étanchéité suffisamment efficace. On peut également envisager de disposer des joints d'étanchéité par emmanchement sur les bagues du roulement, mais dans ce cas on doit utiliser les joints avec armature métallique, ce qui est relativement onéreux à réaliser, voir le document JP 08-219 150.

Le brevet français 2 809 992 décrit un roulement étanche pour butées de suspension, comprenant une bague inférieure, une bague supérieure, une rangée d'éléments roulants, un capot supérieur en matériau synthétique et un joint d'étanchéité monté sur le capot supérieur et pourvu d'une lèvre venant frotter avec la bague inférieure ou avec un capot inférieur solidaire de la bague inférieure. Le joint est pourvu d'un talon disposé et fixé dans une rainure annulaire du capot. Le positionnement et la manipulation du joint qui ne comporte pas d'armature doivent être bien maîtrisés.

Le document EP-A-561 704 décrit un dispositif de roulement de butée de suspension, du type comprenant une première bague, une deuxième bague, une rangée d'éléments roulants disposés entre les deux bagues, un capot dans lequel est disposée la première bague, et au moins une garniture d'étanchéité fixée sur le capot et apte à coopérer avec une surface respectivement non tournante ou tournante, la garniture d'étanchéité comprenant une portion de liaison avec le capot et une lèvre d'étanchéité, la garniture d'étanchéité étant fixée au capot par une pluralité de protubérances issues de la portion de liaison et venant en saillie, au moins partiellement, dans au moins un logement du capot avec lesquels lesdites protubérances coopèrent pour assurer la liaison axiale entre le capot et la garniture d'étanchéité.

La présente invention vise à assurer une bonne étanchéité du roulement et une fabrication économique. En outre, l'invention vise à assurer une compacité élevée et une faible masse du capot.

Tel qu'il est revendiqué, le dispositif de roulement de butée de suspension, est du type comprenant une première bague, une deuxième bague, une rangée d'éléments roulants disposés entre les deux bagues, un capot dans lequel est disposée la première bague, et au moins une garniture d'étanchéité fixée sur le capot et apte à coopérer avec une surface respectivement non tournante ou tournante. La garniture d'étanchéité comprend une portion de liaison avec le capot et une lèvre d'étanchéité. La garniture d'étanchéité est fixée au capot par une pluralité de protubérances axiales issues de la portion de liaison et venant en saillie, au moins partiellement, dans au moins un logement du capot avec lesquelles lesdites protubérances coopèrent pour assurer la liaison axiale entre le capot et la garniture d'étanchéité. On assure ainsi une excellente solidarisation axiale et circonférentielle de la garniture d'étanchéité sur le capot, et on évite l'intrusion d'éléments extérieurs grâce à la lèvre d'étanchéité. Le capot peut présenter une masse et un volume voisins de ceux d'un capot de roulement dépourvu de garniture d'étanchéité.

Dans un mode de réalisation de l'invention, la garniture d'étanchéité comprend deux lèvres d'étanchéité de façon que l'étanchéité soit assurée du côté intérieur et du côté extérieur du roulement. Alternativement, la garniture d'étanchéité comprend une seule lèvre d'étanchéité, l'étanchéité du côté opposé à la lèvre d'étanchéité pouvant être assurée par d'autres moyens.

Dans un mode de réalisation de l'invention, la garniture d'étanchéité comprend une lèvre d'étanchéité dirigée vers l'intérieur.

Dans un mode de réalisation de l'invention, la garniture d'étanchéité comprend une lèvre d'étanchéité dirigée vers l'extérieur.

Dans un mode de réalisation de l'invention, une lèvre d'étanchéité porte sur une bague de roulement.

Dans un mode de réalisation de l'invention, une lèvre d'étanchéité porte sur un capot de roulement.

Avantageusement, la portion de liaison est discontinue circonférentiellement. Des rainures sensiblement radiales peuvent être ménagées dans le capot afin de loger des branches de la portion de liaison. La solidarisation circonférentielle entre la garniture d'étanchéité et le capot est ainsi assurée à la fois par les protubérances et par les branches de la portion de liaison.

Avantageusement, les protubérances sont réparties sur au moins deux cercles concentriques.

Dans un mode de réalisation de l'invention, les protubérances présentent un forme axiale cylindrique.

Dans un mode de réalisation de l'invention, les protubérances présentent une forme de rivet.

Lesdites protubérances peuvent présenter une section carrée.

Dans un mode de réalisation de l'invention, les protubérances présentent une rainure annulaire. La rainure annulaire peut coopérer avec une surface de retenue du capot.

Dans un mode de réalisation de l'invention, le logement du capot présente une forme axiale cylindrique.

Dans un mode de réalisation de l'invention, le logement du capot présente une surface de retenue sensiblement radiale.

Le capot peut être réalisé en polymère, par exemple en polyamide PA 6.6 chargé de 5% de fibres de verre. La garniture d'étanchéité peut être réalisée en un matériau beaucoup plus souple que le capot, par exemple en élastomère, par exemple un élastomère de la famille de l'Elastollan® de la Société BASF.

Le roulement de butée de suspension ainsi obtenu est extrêmement compact, la partie de fixation de la garniture d'étanchéité étant logée dans des rainures du capot. La garniture d'étanchéité est parfaitement maintenue, tant par les protubérances en forme de pion que par les formes complémentaires des rainures du capot et des branches de la portion de liaison de la garniture d'étanchéité, et aussi par le fait que la bague du roulement vient ensuite coiffer la garniture d'étanchéité qui se trouve axialement en sandwich entre ladite bague et le capot correspondant.

Avantageusement, la lèvre d'étanchéité de la garniture peut être utilisée comme moyen de retenue axial du capot supérieur sur le capot inférieur, ladite lèvre venant interférer avec un bourrelet radial de la jupe du capot supérieur en cas d'éloignement axial des deux capots. Ceci est particulièrement utile lors de la manipulation et du transport du dispositif, car les démontages intempestifs et les pertes d'élément sont ainsi évités.

L'invention propose également un procédé de fabrication d'un tel dispositif de roulement de butée de suspension, dans lequel on réalise la garniture d'étanchéité et le capot par moulage dans un même moule à plusieurs empreintes de moulage, ledit moule comportant au moins une partie rotative, et on amène la garniture d'étanchéité et le capot en alignement axial dans le moule, puis on assemble la garniture d'étanchéité et le capot par un mouvement axial de parties du moule.

On entend par capot une pièce en contact avec une bague de roulement et assurant la reprise d'efforts subis par la bague vers au moins un autre élément.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels:
- la figure 1 est une vue en coupe axiale d'un roulement de butée de suspension selon un aspect de l'invention;
- la figure 2 est une vue en coupe axiale de la garniture d'étanchéité;
- la figure 3 est une vue en coupe axiale du capot correspondant;
- la figure 4 est une vue de dessus en élévation de la garniture d'étanchéité;
- la figure 5 est une vue de dessus en élévation du capot;
- la figure 6 est une vue de détail de la figure 1;
- la figure 7 est une vue correspondant à la figure 6 selon un plan de coupe décalé angulairement;
- la figure 8 est une vue de détail du logement prévu dans le capot;
- la figure 9 est une vue de dessous du logement formé dans le capot; et
- la figure 10 est une demi-vue en coupe axiale d'un capot et d'une garniture d'étanchéité selon un autre aspect de l'invention; et
- la figure 11 est une demi-vue en coupe axiale d'un capot et d'une garniture d'étanchéité selon un autre aspect de l'invention ;
- les figures 12 et 13 sont des correspondantes aux figures 8 et 9 d'un autre mode de réalisation ; et
- la figure 14 montre les encombrements respectifs à l'état libre des pions et des trous des figures 12 et 13.

Un amortisseur comprend un cylindre dans lequel peut coulisser un piston dont la tige est liée par son extrémité supérieure à un bloc-support élastique 1, qui vient en appui dans un élément du châssis formant siège et est solidarisé avec celui-ci.

Le bloc-support élastique 1 comprend une coupelle supérieure 2 servant de siège d'appui pour le roulement de butée 3, et un bloc de caoutchouc adhérisé à la surface de ces trois pièces et réalisant une liaison entre celles-ci avec filtration des vibrations.

Un ressort de suspension 4 s'appuie sur une coupelle inférieure 5 qui, à son tour, s'appuie sur le roulement de butée 3.

La coupelle supérieure 2 comprend une portion cylindrique 2a s'étendant vers le bas, à l'opposé du châssis, et une portion radiale 2b s'étendant vers l'extérieur. La surface intérieure de la portion cylindrique 2a et la surface supérieure de la portion radiale 2b sont recouvertes par le matériau élastique utilisé dans le bloc-support élastique 1.

Bien entendu, cette structure supérieure d'appui pour la butée de suspension peut comporter de nombreuses variantes avec ou sans coupelle. La butée peut également venir directement en appui dans un siège supérieur ménagé ou rapporté sur la caisse du véhicule.

La butée de suspension 3 comprend une bague supérieure 6, et une bague inférieure 7, toutes deux en tôle, entre lesquelles sont logées les billes 8. Les billes 8 sont maintenues par une cage 9 en matériau synthétique. La bague inférieure 7 comprend une portion toroïdale 7a présentant une surface concave formant un chemin de roulement adapté aux éléments roulants 8 et une portion radiale 7b prolongeant vers l'intérieur la portion toroïdale 7a et située sensiblement à mi-hauteur des éléments roulants 8.

Le roulement de butée 3 comprend, en outre, un capot supérieur 10, en matériau synthétique tel qu'un polyamide chargé de fibres de verre, recouvrant la surface de la bague supérieure 6 à l'opposé des éléments roulants 8 et en concordance de forme avec la surface extérieure de la portion axiale 2a et la surface inférieure de la portion radiale 2b de la coupelle supérieure 2. Le capot supérieur 10 comprend une jupe sensiblement tubulaire 11 s'étendant vers le bas à partir de son bord de grand diamètre et entourant radialement au moins en partie les éléments roulants 8.

Le capot supérieur 10 comprend, en outre, une jupe intérieure 12 s'étendant vers le bas et présentant un alésage cylindrique et une surface extérieure pourvue d'un bourrelet 13 circulaire présentant une surface sensiblement radiale orientée vers le haut. Entre les jupes extérieure 11 et intérieure 12, le capot supérieur 11 comprend une portion arrondie 14 voisine de la jupe extérieure 12, en concordance de forme avec la bague supérieure 6 et pourvue de nervures 15 sur sa surface convexe. Les nervures 15 affleurent la surface supérieure du capot supérieur 11 et sont disposées en léger retrait par rapport à la surface extérieure de la jupe extérieure 11. Les nervures 15 permettent d'augmenter localement la rigidité du capot supérieur 10 à proximité de la bague supérieure 6. Le capot supérieur 10 comprend en outre une portion supérieure radiale 16, s'étendant vers l'intérieur à partir de la portion arrondie 14, et une portion oblique 17 disposée entre la portion radiale 16 et la jupe intérieure 12. Des nervures radiales 18 sont également formées sur la portion oblique 17, du côté opposé aux éléments roulants 8, et permettent d'accroître la rigidité du capot supérieur 10 et la surface de contact dudit capot supérieur avec son siège d'appui 2.

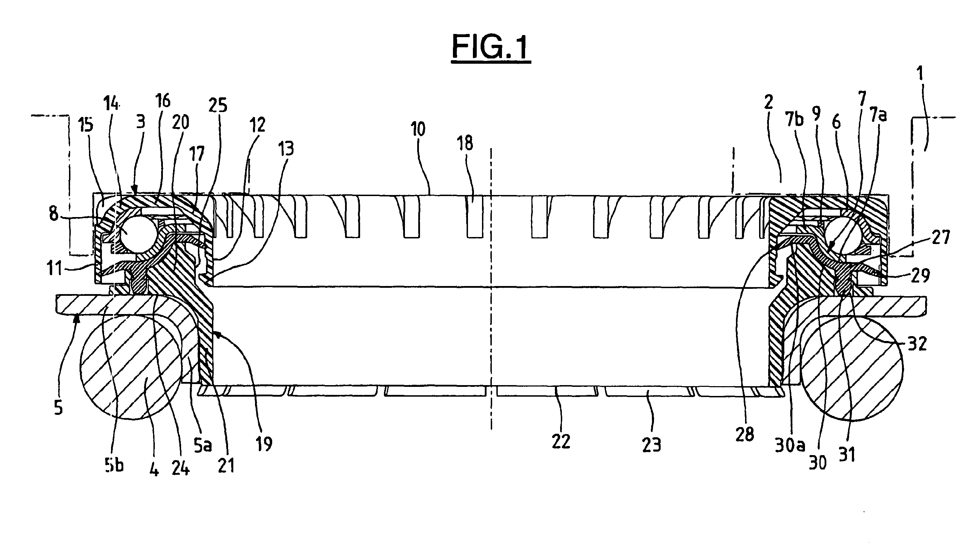

En outre, comme on peut le voir sur la figure 1, les jupes 11 et 12 présentent une épaisseur plus faible que les portions arrondies 14, radiales 16 et obliques 17, ce qui permet d'obtenir une masse raisonnable pour le capot 10 avec une rigidité élevée dans les portions soumises à des efforts mécaniques importants. Le capot 10 est en contact direct avec la bague supérieure 6 d'un côté et avec le siège d'appui supérieur 2 du côté opposé.

Il est encore prévu un capot inférieur 19 annulaire, en concordance de forme avec la coupelle inférieure 5 et avec la bague inférieure 7, et servant à transmettre les efforts axiaux entre ces éléments. Plus précisément, le capot inférieur 19 comprend un corps 20, de forme annulaire, et une jupe axiale 21, également de forme annulaire, s'étendant vers le bas le long de la portion axiale 5a de la coupelle inférieure 5 et en contact avec cette dernière, et présentant une extrémité inférieure annulaire 22 pourvue d'une pluralité de languettes 23, distinctes les unes des autres, occupant chacune un secteur angulaire déterminé et dirigées vers le bas et vers l'extérieur, pour présenter une interférence diamétrale avec ladite portion axiale 5a de la coupelle 5, et éviter une éventuelle désolidarisation entre ledit capot inférieur 19 et ladite coupelle inférieure 5 avant le montage définitif.

Le corps 20 du capot inférieur 19 présente une surface inférieure radiale annulaire 24 en contact avec la surface supérieure de la portion radiale 5b de la coupelle inférieure 5, une surface intérieure 25 annulaire séparée de la surface radiale 24 par la jupe 21, et une surface supérieure arrondie concave 26, en concordance de forme avec la portion toroïdale 7a de la bague inférieure 7 pour servir de siège d'appui à ladite bague inférieure 7. Le corps 20 permet donc de transmettre les efforts axiaux contre la coupelle inférieure 5 et la bague inférieure 7. Le diamètre du cercle fictif passant par le centre des éléments roulants 8 et le diamètre du cercle fictif passant par la spire d'extrémité du ressort 4, sont sensiblement égaux, et la coupelle inférieure 5, le capot inférieur 19 et la bague inférieure 7 présentent des dimensions radiales sensiblement équivalentes, d'où il résulte que les efforts existants dans ces éléments sont essentiellement des efforts axiaux, les efforts de torsion restant très faibles, ce qui permet d'alléger la structure desdites pièces concernées.

En outre, il est prévu un organe d'étanchéité 27 réalisé en matériau synthétique souple, notamment en élastomère, par exemple en Elastollan® de la Société BASF, disposé entre la bague inférieure 7 et le capot inférieur 19.

L'organe d'étanchéité 27 comprend une lèvre intérieure 28 annulaire, venant frotter sur une surface extérieure cylindrique de la jupe intérieure 12 du capot supérieur 10, une lèvre extérieure 29, annulaire, en contact de frottement avec l'alésage de la jupe extérieure 11 du capot supérieur 10, une portion de liaison 30, en concordance de forme avec la surface inférieure de la bague inférieure 7 et présentant une pluralité de branches radiales de faible largeur, disposées dans des rainures radiales 33, de forme concordante, ménagées dans la surface supérieure concave 26 du corps 20 du capot inférieur 19, et une pluralité de pions 31 disposés sur la surface inférieure de la portion de liaison 30, dirigés vers le bas, en saillie dans des logements correspondants 32, ménagés selon une direction axiale dans le corps 20 du capot inférieur 19.

La portion de liaison 30 permet d'assurer, d'une part, la solidarisation entre les lèvres d'étanchéité 28 et 29, ce qui permet de réaliser la garniture d'étanchéité en une seule pièce, et, d'autre part, d'assurer la solidarisation en rotation de la garniture d'étanchéité 27 et du capot inférieur 19, grâce aux branches radiales de la portion de liaison 30 coopérant avec les bords radiaux des rainures 33 du corps 20. La portion de liaison est en contact avec la portion toroïdale 7a de la bague inférieure 7. La portion radiale 7b est disposée au-dessus de la portion de liaison 30 avec un faible espace axial entre ces deux pièces. Entre la lèvre 28 et la portion toroïdale 7a, la portion de liaison 30 comprend une couronne radiale 30a.

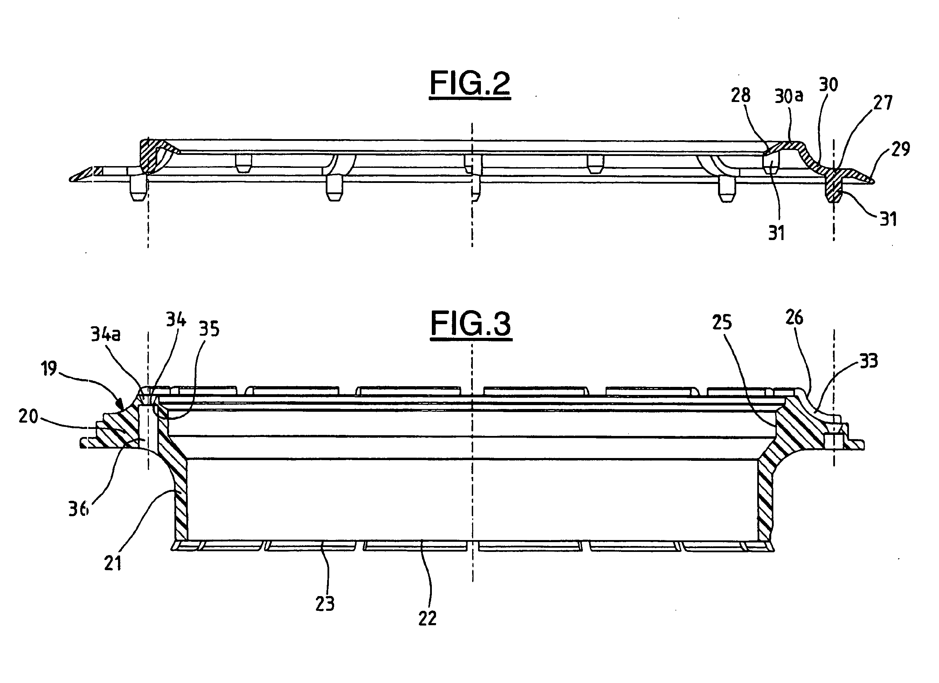

Comme on le voit plus particulièrement sur les figures 2 et 3, la garniture d'étanchéité 27 est pourvue d'une pluralité de pions 31 disposés selon deux cercles concentriques, les trous 32 ménagés dans le corps 20 étant également répartis en deux groupes le long de deux cercles concentriques pour coopérer avec les pions 31. On assure ainsi une solidarisation en rotation à proximité de la lèvre d'étanchéité intérieure 28 pour les pions intérieurs et de la lèvre d'étanchéité extérieure 29 pour les pions extérieurs, ce qui évite une éventuelle déformation de la garniture d'étanchéité 27. Les pions 31 sont orientés vers la coupelle inférieure 5.

En outre, les pions 31 assurent également une solidarisation axiale entre la garniture d'étanchéité 27 et le capot inférieur 19. Les pions 31 présentent une forme générale cylindrique avec une extrémité libre légèrement chanfreinée ou arrondie. Les trous 32 ménagés dans le corps 20 présentent un rétrécissement 34 proche de la bague inférieure 7 pourvu d'une surface oblique 34a proche de la bague inférieure 7, et une portion cylindrique 36 distante de ladite bague inférieure 7 et séparée du rétrécissement 34 par une surface radiale 35. Le corps 20 étant réalisé en matériau nettement plus rigide que la garniture d'étanchéité 27, les pions 32 se déforment lors du montage de la garniture d'étanchéité 27 sur le capot inférieur 19 au passage dudit rétrécissement 34, puis tendent à reprendre un diamètre plus important après avoir franchi le petit diamètre du rétrécissement 34 et sont alors retenus contre un démontage par mouvement axial en sens inverse, tendant à séparer la garniture d'étanchéité 27 du capot inférieur 19, par la surface radiale 35.

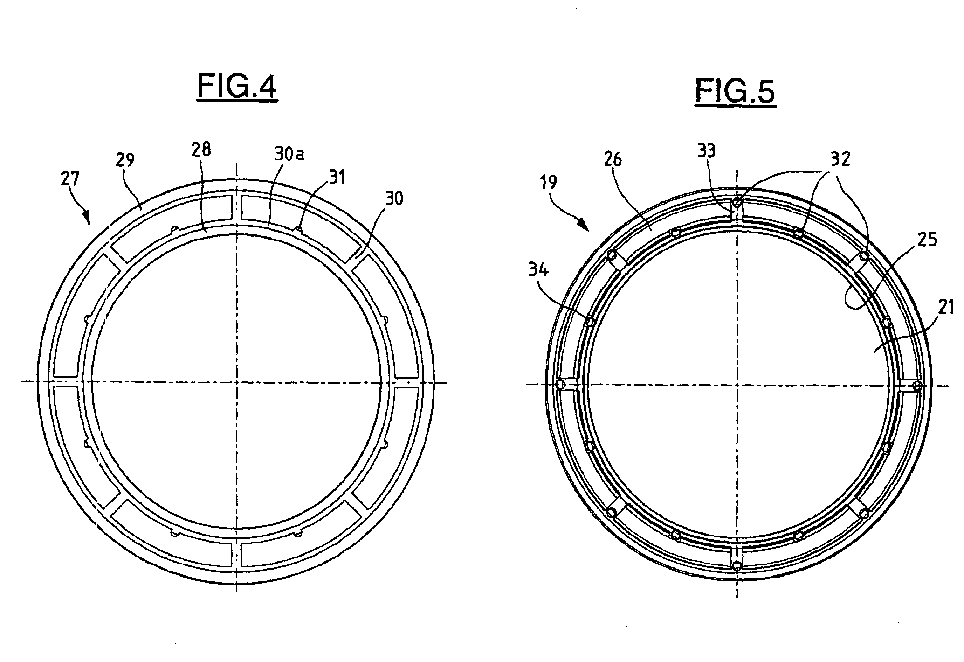

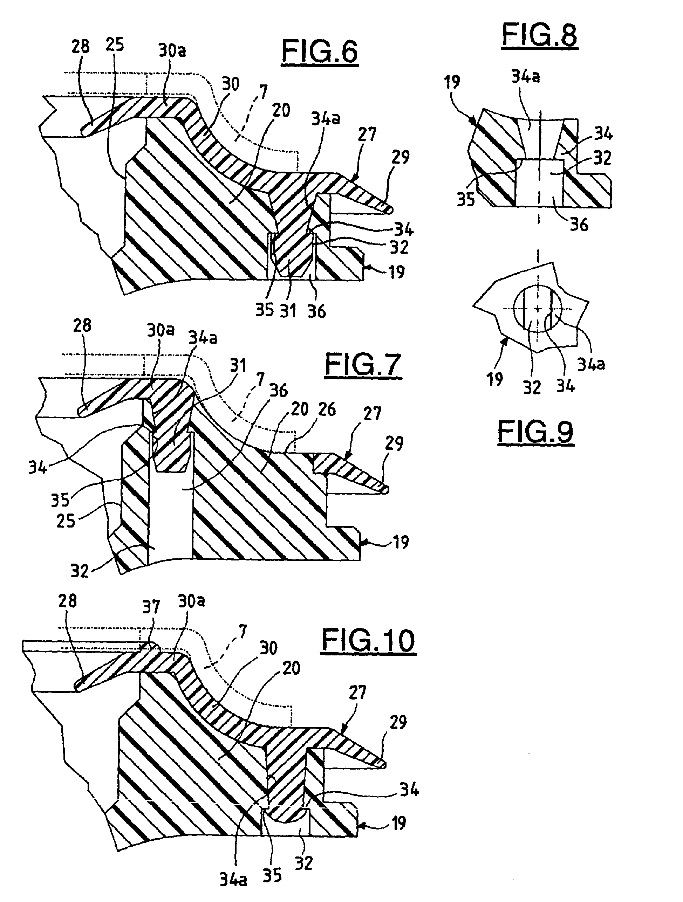

Comme on peut le voir sur les figures 5 et 6, les trous de fixation externes 32 du corps 20 sont ménagés à partir des rainures 33, tandis que les trous 32 internes sont ménagés en-dehors desdites rainures 33. Les pions 31 externes de la garniture d'étanchéité 27 sont supportés par les branches radiales de la portion de liaison 30, alors que les pions 31 internes sont supportés par le bord annulaire de la portion de liaison voisin de la lèvre intérieure 28.

Dans le mode de réalisation illustré sur la figure 10, la surface radiale 35 du trou 32 est disposée relativement bas et le pion 31 à l'état monté présente alors une forme de tête de rivet. Alternativement, on peut prévoir des trous 32 lisses et traversants, avec fixation définitive de la garniture d'étanchéité par déformation à chaud de l'extrémité libre des pions 31.

En outre, la garniture d'étanchéité 27, illustrée sur la figure 10, comprend un bourrelet circulaire 37 formé sur une surface supérieure radiale de la lèvre d'étanchéité intérieure 28 prévue pour être pincée entre la portion radiale intérieure 7b de la bague inférieure 7 et le corps 20 du capot inférieur 19, ce qui permet de réduire les risques de voilage de la lèvre d'étanchéité intérieure 28.

On comprend également que, en cas de tentative de séparation axiale du capot supérieur 10 du reste du roulement, le bourrelet circulaire 13 de la jupe intérieure 12 du capot supérieur 10 vient interférer diamétralement avec la lèvre d'étanchéité intérieure 28 de la garniture d'étanchéité 27, empêchant ainsi une séparation complète du capot supérieur 10. Comme la garniture d'étanchéité 27 est solidaire axialement du capot inférieur 19, grâce à la coopération entre les pions 31 en saillie et les trous 32, un ensemble unitaire est formé, comprenant le capot supérieur 10, les bagues 6 et 7, les éléments roulants 8 et leur cage 9, la garniture d'étanchéité 27, le capot inférieur 19 et la coupelle inférieure 5.

En d'autres termes, la garniture d'étanchéité 27 assure, outre une fonction d'étanchéité, un fonction de retenue axiale du capot avec lequel ladite garniture d'étanchéité 27 est en contact statique et du capot avec lequel ladite garniture d'étanchéité 27 est en contact de frottement.

L'ensemble ainsi réalisé est extrêmement compact, puisque la partie de fixation de la garniture est noyée dans le capot inférieur. La garniture d'étanchéité est parfaitement maintenue, tant par les pions que par la complémentarité de forme entre la garniture et le capot inférieur.

À titre de variante, on pourrait prévoir que les lèvres de garniture viennent porter sur la surface de la bague du roulement tournante par rapport à ladite garniture.

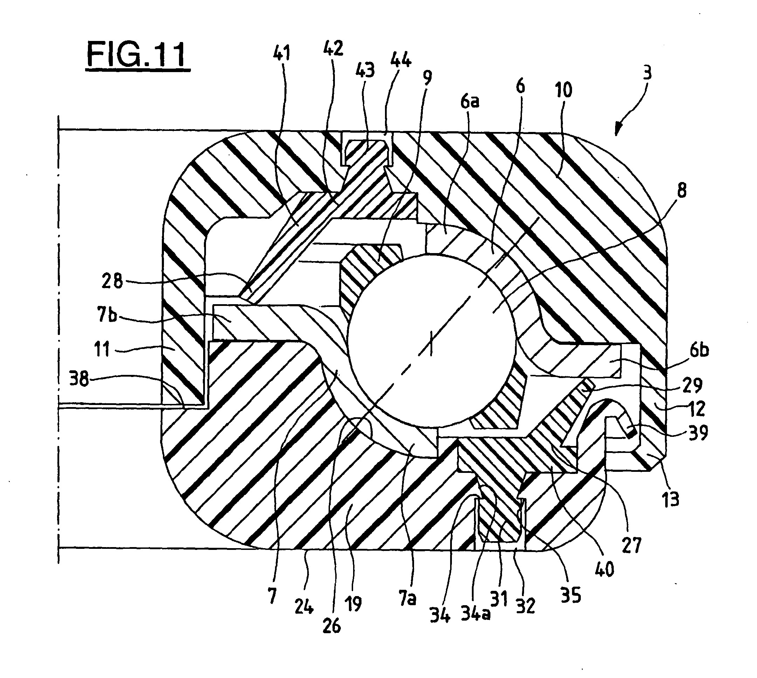

Comme illustré sur la figure 11, le palier à roulement 3 comprend une bague supérieure 6 pourvue d'une portion toroïdale 6a en contact avec les éléments roulants 8 et d'une portion radiale 6b s'étendant vers l'extérieur, et une bague inférieure 7 pourvue d'une portion toroïdale 7a en contact avec les éléments roulants 8 et d'une portion radiale 7b s'étendant radialement vers l'intérieur, les portions radiales 6b et 7b étant sensiblement à la même hauteur dans le sens axial.

Le capot inférieur 19 est dépourvu de jupe et comprend une surface inférieure radiale 24 et une surface toroïdale 26 en contact avec la portion toroïdale 7a correspondante. Un dégagement circulaire 38 est formé sur le bord supérieur du côté intérieur du corps 19, à proximité de l'extrémité libre de la portion radiale 7b de la bague inférieure 7 et est disposé à faible distance de l'extrémité libre de la jupe radiale 11 du corps supérieur 10 pour former une étanchéité par passage étroit. Du côté extérieur, le corps 19 comprend une lèvre 39 s'étendant en oblique vers le bas vers l'extérieur et apte à interférer diamétralement avec le bourrelet circulaire 13 de la jupe radiale extérieure 12 du corps supérieur 10 pour empêcher une désolidarisation entre les capots supérieur 10 et inférieur 19.

La garniture d'étanchéité 27 comprend une lèvre 29 dirigée vers l'extérieur et venant frotter sur la surface inférieure de la portion radiale 6b de la bague supérieure 6, un corps 40 annulaire, de section transversale rectangulaire, disposé dans un logement correspondant du capot inférieur 19 et une pluralité de pions 31 dirigés vers le bas et disposés dans une pluralité de trous 32 débouchant sur la surface inférieure radiale 24 du capot inférieur 19.

En outre, le palier à roulement 3 comprend une autre garniture d'étanchéité 41 supportée par le capot supérieur 10 et pourvue d'une lèvre d'étanchéité intérieure 28 dirigée en oblique vers le bas en contact de frottement avec la surface supérieure de la portion radiale 7b de la bague inférieure 7, un corps 42 annulaire disposé dans un logement correspondant ménagé dans le capot supérieur 10 et présentant en section une forme générale rectangulaire, et une pluralité de pions 43 en saillie vers le haut dans les trous axiaux 44 débouchant sur la surface supérieure du capot supérieur 10.

Plus précisément, le logement du corps 42 de la garniture d'étanchéité 41 ainsi que les trous 44 sont formés dans la portion radiale 16 du capot supérieur 10. Les lèvres d'étanchéité 28 et 29 en contact avec des surfaces de bagues de roulement assurent une excellente étanchéité. Cette étanchéité est renforcée par le passage étroit formé entre le dégagement 38 du capot inférieur 19 et la jupe intérieure 11 du capot supérieur 10 et par le passage étroit formé entre la lèvre 39 du capot inférieur 19 et le bourrelet annulaire 13 de la jupe 12 du capot supérieur 10. La lèvre 39, réalisée dans le même matériau que le capot inférieur 19 et offrant ainsi une rigidité plus élevée que les garnitures d'étanchéité 27 et 41 assure, d'une part, une étanchéité par passage étroit et, d'autre part, la retenue par interférence diamétrale avec le bourrelet 13.

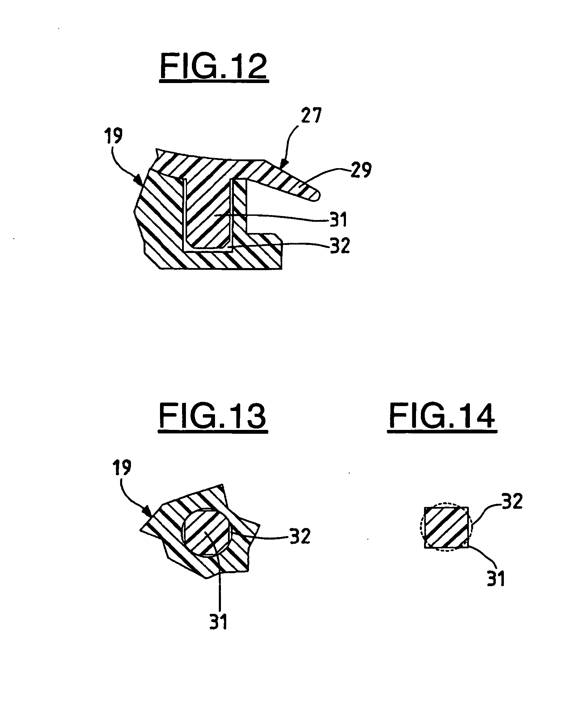

Comme illustré sur les figures 12 à 14, les trous de fixation externes 32 du corps 20 sont ménagés à partir des rainures 33 et sont cylindriques, circulaires et borgnes. Les trous 32 internes peuvent également être cylindriques, circulaires et borgnes. Les pions 31 présentent à l'état libre une forme cylindrique de section carrée à extrémité chanfreinée. La diagonale de la section carrée des pions 31 est supérieure au diamètre des trous 32. Les angles des pions 31 sont écrasés contre la paroi circulaire des trous 32. Les pions 31 à l'état monté dans les trous 32 sont serrés et déformés par les parois des trous 32 ce qui assure la retenue axiale entre le capot et la garniture d'étanchéité. Le chanfrein d'extrémité des pions 31 facilite l'insertion des pions 31 dans les trous 32. Par ailleurs, le faible espace radial subsistant, par endroits, entre un pion et le trou correspondant permet à l'air de s'échapper pendant l'enfoncement du pion dans le trou.

L'ensemble capot inférieur et garniture d'étanchéité pourraient être avantageusement réalisé sur une presse à injecter en utilisant un procédé d'assemblage dans le moule avec un moule à deux parties tournantes permettant au moyen d'un même moule de réaliser le moulage et l'assemblage de pièces différentes, tant sur le plan de la géométrie que la matière, sans nécessité de reprise des pièces. Le moule comprend un corps fixe pourvu d'un noyau excentré et d'une amenée de matière à injecter, un corps mobile pourvu d'un noyau excentré du côté opposé au noyau fixe, une première partie tournante disposée entre le corps fixe et le corps mobile, d'axe de rotation et de translation parallèle à l'axe du moule, et une deuxième partie tournante disposée entre le corps fixe et la première partie tournante. Des empreintes de moulage diamétralement opposées sont prévues dans chaque partie tournante, avec des fonds dirigés respectivement vers le corps fixe et le corps mobile. Les parties tournantes sont prévues pour tourner de 180° pour échanger les positions respectives de leurs empreintes. L'amenée de matière à injecter est prévue pour alimenter une première cavité de moulage au niveau du noyau fixe excentré pour mouler une première partie de la pièce à réaliser, et une deuxième cavité de moulage au niveau du noyau mobile pour mouler une deuxième partie de la pièce à réaliser. Des arbres de support et d'entraînement sont prévus pour déplacer les parties moulées et les assembler. Le moulage a lieu dans des positions extrêmes de moulage, puis les parties moulées sont ramenées vers la position centrale et assemblées par un mouvement axial.

On peut se référer à cet égard au document EP B 1 060 868.

Une partie du moule permettra de réaliser le capot. L'autre partie du moule permettra de réaliser la garniture, ces deux pièces étant ensuite assemblées, avec ou sans formation de tête de rivet à l'extrémité des pions, après ouverture axiale, rotation des parties tournantes du moule et refermeture du moule, l'assemblage du capot et de la garniture et, éventuellement, la formation des têtes de rivet se faisant lors de la fermeture du moule. On bénéficie ainsi d'un sous-ensemble capot/garniture d'étanchéité économique, de faible masse et particulièrement compact grâce à la disposition d'une partie de la garniture d'étanchéité entre la bague et le capot correspondant.

## Revendications

1. Dispositif de roulement de butée de suspension (3), du type comprenant une première bague (7), une deuxième bague (6), une rangée d'éléments roulants (8) disposés entre les deux bagues, un capot (19) dans lequel est disposé la première bague, et au moins une garniture d'étanchéité (27) fixée sur le capot et apte à coopérer avec une surface respectivement non tournante ou tournante, la garniture d'étanchéité (27) comprenant une portion de liaison (30) avec le capot (19) et une lèvre d'étanchéité (28), la garniture d'étanchéité étant fixée au capot par une pluralité de protubérances axiales (31) issues de la portion de liaison (30) et venant en saillie, au moins partiellement, dans au moins un logement (32) du capot avec lesquels lesdites protubérances coopèrent pour assurer la liaison axiale entre le capot et la garniture d'étanchéité.

2. Dispositif selon la revendication 1, **caractérisé par le fait que** la garniture d'étanchéité (27) comprend deux lèvres d'étanchéité (28, 29).

3. Dispositif selon la revendication 1, **caractérisé par le fait que** la garniture d'étanchéité comprend une seule lèvre d'étanchéité.

4. Dispositif selon l'une quelconque des revendications précédentes, **caractérisé par le fait que** la garniture d'étanchéité (27) comprend une lèvre d'étanchéité (28) dirigée vers l'intérieur.

5. Dispositif selon l'une quelconque des revendications précédentes, **caractérisé par le fait que** la garniture d'étanchéité (27) comprend une lèvre d'étanchéité (29) dirigée vers l'extérieur.

6. Dispositif selon l'une quelconque des revendications précédentes, **caractérisé par le fait qu'**une lèvre d'étanchéité porte sur une bague de roulement.

7. Dispositif selon l'une quelconque des revendications précédentes, **caractérisé par le fait qu'**une lèvre d'étanchéité (28) porte sur un capot (10).

8. Dispositif selon l'une quelconque des revendications précédentes, **caractérisé par le fait que** la portion de liaison (30) est discontinue circonférentiellement.

9. Dispositif selon l'une quelconque des revendications précédentes, **caractérisé par le fait que** des rainures (33) sensiblement radiales sont ménagées dans le capot (19) pour loger des branches de la portion de liaison (30).

10. Dispositif selon l'une quelconque des revendications précédentes, **caractérisé par le fait que** lesdites protubérances (31) sont réparties sur au moins deux cercles concentriques.

11. Dispositif selon l'une quelconque des revendications précédentes, **caractérisé par le fait que** lesdites protubérances (31) présentent une forme axiale cylindrique.

12. Dispositif selon l'une quelconque des revendications 1 à 10, **caractérisé par le fait que** lesdites protubérances présentent une forme de rivet.

13. Dispositif selon l'une quelconque des revendications précédentes, **caractérisé par le fait que** lesdites protubérances présentent une section carrée.

14. Dispositif selon l'une quelconque des revendications précédentes, **caractérisé par le fait que** le logement du capot présente une forme axiale cylindrique.

15. Dispositif selon l'une quelconque des revendications 1 à 12, **caractérisé par le fait que** le logement (32) du capot (10) présente une surface radiale de retenue (35).

16. Procédé de fabrication d'un dispositif selon l'une des revendications précédentes dans lequel on réalise la garniture d'étanchéité et le capot, par moulage dans un même moule à plusieurs empreintes de moulage, ledit moule comportant au moins une partie rotative, et on amène la garniture d'étanchéité et le capot en alignement axial dans le moule, puis on assemble la garniture d'étanchéité et le capot par un mouvement axial de parties du moule.

## Claims

1. Suspension thrust bearing device (3), of the type comprising a first race (7), a second race (6), a row of rolling members (8) that are placed between the two races, a cap (19) in which the first race is placed, and at least one seal (27) fastened to the cap and able to cooperate with a respectively non-rotary or rotary surface, the seal (27) comprising a linking portion (30) for linking to the cap (19) and a sealing lip (28), the seal being fastened to the cap via a plurality of axial protuberances (31) emanating from the linking portion (30) and projecting, at least partly, into at least one housing (32) of the cap with which the said protuberances cooperate in order to ensure axial linkage between the cap and the seal.

2. Device according to Claim 1, **characterized in that** the seal (27) has two sealing lips (28, 29).

3. Device according to Claim 1, **characterized in that** the seal has a single sealing lip.

4. Device according to any one of the preceding claims, **characterized in that** the seal (27) has an inwardly directed sealing lip (28).

5. Device according to any one of the preceding claims, **characterized in that** the seal (27) has an outwardly directed sealing lip (29).

6. Device according to any one of the preceding claims, **characterized in that** the seal bears on a bearing race.

7. Device according to any one of the preceding claims, **characterized in that** a sealing lip (28) bears on a cap (10).

8. Device according to any one of the preceding claims, **characterized in that** the linking portion (30) is circumferentially discontinuous.

9. Device according to any one of the preceding claims, **characterized in that** substantially radial grooves (33) are made in the cap (19) in order to house arms of the linking portion (30).

10. Device according to any one of the preceding claims, **characterized in that** the said protuberances (31) are distributed over at least two concentric circles.

11. Device according to any one of the preceding claims, **characterized in that** the said protuberances (31) are of cylindrical axial shape.

12. Device according to any one of Claims 1 to 10, **characterized in that** the said protuberances take the form of a rivet.

13. Device according to any one of the preceding claims, **characterized in that** the said protuberances have a square cross section.

14. Device according to any one of the preceding claims, **characterized in that** the housing for the cap is of cylindrical axial shape.

15. Device according to any one of Claims 1 to 12, **characterized in that** the housing (32) for the cap (10) has a radial retention surface (35).

16. Process for manufacturing a device according to one of the preceding claims, in which the seal and the cap are moulded in one and the same multi-impression mould, the said mould comprising at least one rotary part, the seal and the cap are brought into axial alignment in the mould, and the seal and the cap are then assembled by an axial movement of parts of the mould.

## Patentansprüche

1. Axialwälzlager für eine Aufhängung (3) von einer Art, die einen ersten Ring (7), einen zweiten Ring (6), eine Reihe Wälzkörper (8), die zwischen den beiden Ringen angeordnet sind, eine Kappe (19), an welcher der erste Ring angeordnet ist, und wenigstens einen Dichteinsatz (27) aufweist, der an der Kappe befestigt und zum Zusammenwirken mit einer entsprechenden, nicht rotierenden oder rotierenden Oberfläche fähig ist, wobei der Dichteinsatz (27) ein Verbindungsteil (30) mit der Kappe (19) und eine Dichtlippe (28) aufweist, und der Dichteinsatz an der Kappe durch eine Mehrzahl an dem Verbindungsteil (30) entspringenden Axialvorsprüngen (31) befestigt ist, die vorspringend wenigstens teilweise in wenigstens eine Aufnahme (32) der Kappe gelangen, mit welcher die Vorsprünge zusammenwirken, um die Axialverbindung zwischen der Kappe und dem Dichteinsatz sicherzustellen.

2. Vorrichtung nach Anspruch 1, **dadurch gekennzeichnet, dass** der Dichteinsatz (27) zwei Dichtlippen (28, 29) aufweist.

3. Vorrichtung nach Anspruch 1, **dadurch gekennzeichnet, dass** der Dichteinsatz eine einzelne Dichtlippe aufweist.

4. Vorrichtung nach einem der vorhergehenden Ansprüche, **dadurch gekennzeichnet, dass** der Dichteinsatz (27) eine nach innen gerichtete Dichtlippe (28) aufweist.

5. Vorrichtung nach einem der vorhergehenden Ansprüche, **dadurch gekennzeichnet, dass** der Dichteinsatz (27) eine nach außen gerichtete Dichtlippe (29) aufweist.

6. Vorrichtung nach einem der vorhergehenden Ansprüche, **dadurch gekennzeichnet, dass** eine Dichtlippe auf einem Wälzlagerring ruht.

7. Vorrichtung nach einem der vorhergehenden Ansprüche, **dadurch gekennzeichnet, dass** eine Dichtlippe (28) auf einer Kappe (10) ruht.

8. Vorrichtung nach einem der vorhergehenden Ansprüche, **dadurch gekennzeichnet, dass** der Verbindungsbereich (30) kreisumfangförmig unterbrochen ist.

9. Vorrichtung nach einem der vorhergehenden Ansprüche, **dadurch gekennzeichnet, dass** im wesentlichen radiale Nuten (33) in der Kappe (19) ausgespart sind, um Verzweigungen des Verbindungsteils (30) aufzunehmen.

10. Vorrichtung nach einem der vorhergehenden Ansprüche, **dadurch gekennzeichnet, dass** die Vorsprünge (31) auf wenigstens zwei konzentrischen Kreisen verteilt sind.

11. Vorrichtung nach einem der vorhergehenden Ansprüche, **dadurch gekennzeichnet, dass** die Vorsprünge (31) eine axialzylindrische Form aufweisen.

12. Vorrichtung nach einem der Ansprüche 1 bis 10, **dadurch gekennzeichnet, dass** die Vorsprünge eine Nietenform aufweisen.

13. Vorrichtung nach einem der vorhergehenden Ansprüche, **dadurch gekennzeichnet, dass** die Vorsprünge einen quadratischen Querschnitt aufweisen.

14. Vorrichtung nach einem der vorhergehenden Ansprüche, **dadurch gekennzeichnet, dass** die Aufnahme der Kappe eine axialzylindrische Form aufweist.

15. Vorrichtung nach einem der Ansprüche 1 bis 12, **dadurch gekennzeichnet, dass** die Aufnahme (32) der Kappe (10) eine radiale Haltefläche (35) aufweist.

16. Herstellungsverfahren für eine Vorrichtung nach einem der vorhergehenden Ansprüche, bei welchem man den Dichteinsatz und die Kappe durch Formen in der gleichen Form mit mehreren Formprägungen realisiert, wobei die Form wenigstens ein Drehteil aufweist, und man den Dichteinsatz und die Kappe in axialer Ausrichtung in die Form bringt und dann den Dichteinsatz und die Kappe durch eine Axialbewegung der Formteile zusammenbaut.
